# EUROPEAN PATENT SPECIFICATION

(11) **EP 4 474 668 B1**
(45) Date of publication and mention of the grant of the patent: **25.03.2026**
(21) Application number: 23425029.8
(22) Date of filing: 09.06.2023
(51) Int. Cl.: F16D 27/06

(54) **CLUTCH/BRAKE ASSEMBLY**
KUPPLUNGS-BREMSANORDNUNG
ENSEMBLE EMBRAYAGE/FREIN

(43) Date of publication of application: 11.12.2024
(73) Proprietor: Microtecnica S.r.l., 10126 Turin (IT)
(72) Inventor: Mornacchi, Andrea, 10126 Torino (TO) (IT); Mantia, Elio, 10126 Torino (TO) (IT); Serricchio, Vincenzo, 10141 Torino (TO) (IT); Savino, Dario, 13040 Palazzolo Vercellese (VC) (IT); Allevi, Simone, 63083 Appignano del Tronto (AP) (IT)
(74) Representative: Dehns

(56) References cited:
- CN-A- 108 368 894
- CN-A- 113 700 814
- US-A- 5 209 085
- US-A1- 2021 071 720
- US-B2- 8 319 384

## Description

### TECHNICAL FIELD

The present disclosure relates to a clutch/brake assembly particularly for use with an electromechanical actuator, EMA.

### BACKGROUND

Actuators are used in many applications e.g. industrial machinery, vehicles, aircraft, to move parts or surfaces. An actuator has a controller and a source of energy. One form of actuator commonly used for its simplicity, reliability and relatively low cost is a hydraulic actuator, where the energy is provided by a hydraulic fluid. Hydraulic actuators can, however, be prone to leakage, can be heavy and bulky and relatively dirty. In some industries, e.g. in aircraft and other vehicles, in recent times, there has been a move from hydraulic actuators to electromechanical actuators (EMAs).

A typical actuator includes a motor, controlled by a controller, connected by an actuator rod to an output which is connected to the part to be moved. The motor therefore drives the output based on an input command from the controller. A reducer e.g. in the form of a gear reducer assembly, is located between the motor and the output to reduce the speed from the motor to the output based on a reducer gear ratio.

In a typical EMA, a clutch/brake assembly is installed in the area with minimum torque between the motor and the gear reducer to engage/disengage the motor. Typically, the clutch is controlled to engage/disengage by a solenoid.

The transition from hydraulic actuators to EMAs, however, has required the redefinition of several components due to the different density of the power supply. One such component is the clutch/brake assembly.

Conventional friction base clutch/brake assemblies comprise a number of plates or cones that are forced into frictional engagement. These require a compressive force to be applied proportional to the torque to be transmitted. In the case of high torques, there is therefore a need for high power and heavy solenoids. A high current is also needed to generate and maintain sufficient force to transfer the torque and this can result in the generation of heat that needs to be dissipated.

In a conventional actuator as described above, the torque is lowest between the motor and the reducer, and so typically the clutch/brake assembly is installed here. This will operate to disconnect the motor from the gear reducer if required. If, however, a jam or other damage occurs in the gear reducer, downstream of the clutch, the clutch/brake assembly at this location would not respond to disconnect the output. In some applications, e.g. in aircraft control actuators, this can have catastrophic consequences. In, for example, an autopilot actuator, with a clutch/brake assembly located upstream of the reducer, a gear jam in the reducer or damage to the reducer would mean that the pilot is no longer able to control the aircraft. In such applications, therefore, safety requirements dictate that the clutch should be located downstream of the reducer - i.e. between the reducer and the output. This region of the actuator, however, is a relatively high torque region and the clutch/brake assembly needs to be configured to transmit a much higher (e.g. in the order of 20 times as much) torque. To have a conventional clutch/brake assembly located in this high torque region requires a large, heavy solenoid to provide the required force, and will also require heat dissipation solutions due to the high current requirement. These requirements add to the overall size and weight of the assembly. Clutch/brake assemblies are described in US 8 319 384 B2 and US 5 209 085 A.

There is a desire for an improved clutch/brake assembly that can operate using a smaller solenoid and that generates less heat and that can be smaller, lighter and more compact. This would be particularly useful for EMAs where the clutch is to be located in a high torque region, but could also be used in lower torque regions (although there is then a trade-off between the mechanically simpler, less expensive conventional plate structures, which may be sufficient in these low-torque regions, and the advantages in relation to size and weight of the new design).

### SUMMARY

According to the present disclosure, there is provided a clutch/brake assembly as defined by claim 1.

Also provided is an EMA comprising such a clutch/brake assembly.

### BRIEF DESCRIPTION

Examples of the clutch/brake assembly will now be described with reference to the drawings. It should be noted that these are examples only and variations are possible within the scope of the claims.
Figure 1 is a schematic view of an EMA assembly for the purposes of explanation.
Figure 2 is a sectional view showing a clutch/brake assembly in an EMA assembly, according to the disclosure.

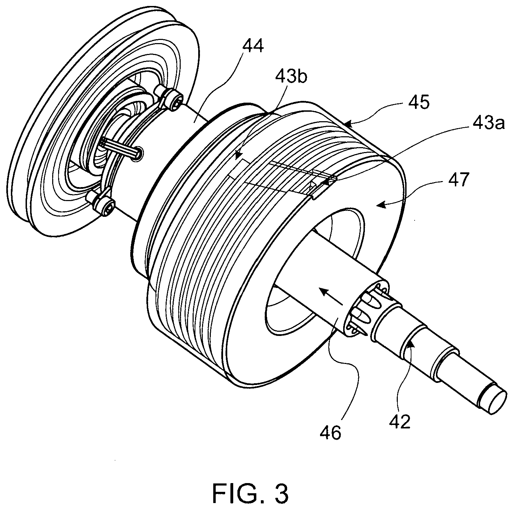

Figure 3 is a 3D view of a clutch/brake assembly according to the disclosure.

### DETAILED DESCRIPTION

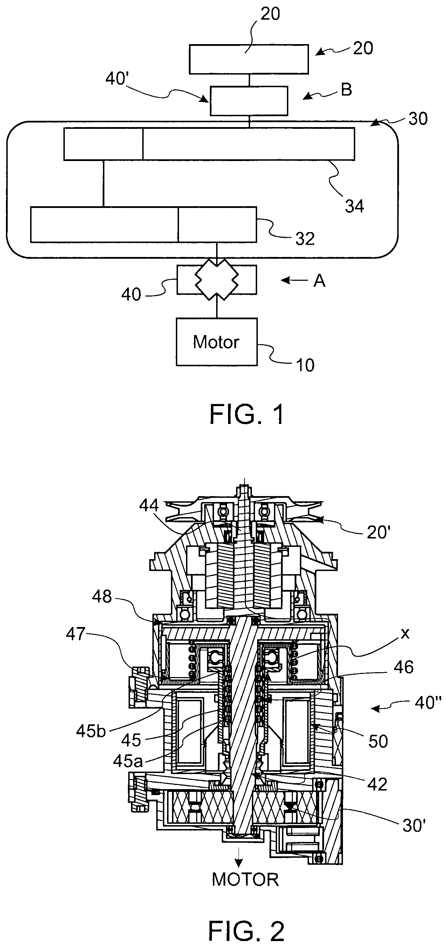

Figure 1 is used for explaining the arrangement of a clutch/brake assembly in an EMA (as described in the Background). This will only be described briefly here.

Figure 1 shows an EMA motor 10, controlled by an EMA controller (not shown) to drive the output 20 based on an input command, A gear reducer assembly 30 is provided between the motor 10 and the output 20. Here, the reducer 30 is shown having two gears 32, 34 to provide the speed reduction ratio, but, in practice different types and configurations of gear assembly with different numbers and types of gear are possible. Any known type of gear reducer is possible.

As mentioned above, a clutch/brake assembly is provided between the motor 10 and the output 20 to enable the output to be disengaged from/engaged with the motor. Conventionally, the clutch/brake assembly 40 is located in a low torque region A so that such a large solenoid is not needed to operate the clutch but, as mentioned about, in some applications this is not sufficient as the clutch/brake assembly will then not be operable in the case of a fault in the reducer 30. In such applications, therefore, the clutch/brake assembly 40' has to be located downstream of the reducer 30 (region B in Fig. 1) but, because this is a higher torque region, larger solenoids are required.

The clutch/brake assembly of this disclosure, described further below, will have particular application and provide particular benefits for applications where the assembly is used in such a high-torque region, but may also be used in other regions (such as region A). Because the assembly of the present disclosure will typically be more expensive to manufacture than the conventional clutch/brake assembly, however, it may be preferable to use conventional assemblies in applications and regions where the torque is such that they can be operated with a relatively small solenoid.

Figure 2 shows, in cross-section, a clutch/brake assembly according to this disclosure, located between the gear reducer 30' and the output 20'. The gear reducer 30' will not be described further and will correspond to conventional reducers such as described above with reference to Fig. 1. The gear reducer 30' drives a rotating shaft 42 which engages with and drives an output shaft 44 that drives the output 30'. Whilst the assembly of the disclosure is described for an EMA with a gear reducer, the assembly may also be used in a direct drive system - i.e. where the motor is connected directly to the rotating shaft 42.

The clutch/brake assembly 40" comprises a logarithmic spring 45, a translating shaft 46, rotating and translating elements 47 to engage the spring 45 and transmit torque, and an output sleeve 48 connected to the output shaft. The clutch/brake assembly is drive by a solenoid 50 to which the translating shaft 46 is connected.

The logarithmic spring 45 has a rectangular section rotating inside the output sleeve 48 and is connected to the rotating shaft 42. A logarithmic spring has a constant angle between the tangent and the radial line at any point on the radius of the spring helix. The logarithmic spring, thanks to its design, allows amplification of the ratio between the torque necessary to expand it and the torque transmitted by friction with output sleeve 48. This proportion guarantees transmission of high torques, from the reducer to the output, with a relatively reduced engagement force compared to conventional clutches / brakes. If the output sleeve 48 is solidly fitted into the body of the actuator, the spring 45 acts as a brake. If the output sleeve 48 is solidly connected to the output shaft 44, the spring provides friction. The clutch/brake is activated and released by radial expanding or contracting the spring by acting in the appropriate direction on the spring ends 45a, 45b.

In operation, as the motor drives the rotating shaft 42, via the reducer 30', and when the solenoid 50 is in a state energised to engage the clutch, the solenoid causes a displacement of the translating shaft 46 that is pressed against the rotating and translating shaft 47. Rotating and translating shaft 47 acts on the first end 45a of the spring causing the radial expansion of the spring 45 which engages with the sleeve 48. The friction between the spring 45 and the output sleeve 48 generated by the expansion of the spring 45, allows the transfer of the torque generated by the motor and transmitted to the clutch via the rotating shaft 42 to the output sleeve 48 which transmits torque to the output via output shaft 44. The torque is transmitted to the spring 45 through the spring tooth 43b

When the solenoid is in a state non-energised to disengage the clutch, the torque generated by stiffness of the logarithmic spring acts through the spring tooth 43a on the rotating and translating shaft 47. The torque results in an axial force along the axis of the rotating and translating shaft 47 thanks to the inclined plane of the interface between the spring tooth 43a and rotating and translating shaft 47. The axial force pushes the rotating and translating shaft 47 against the translating shaft 46 that causes the moving element of the solenoid to return to its de-energized condition. The translation of the moving elements 47 and 46 allows the spring to return to its rest condition and therefore to restore the radial gap between the spring 45 and the output sleeve 48 disconnecting the gearbox from the output and allowing the free rotation of the output 20.

The rotating and translating shaft (clutch elements 47) may be coupled to the input shaft such that it rotates with the input shaft and is also able to translate linearly relative to the input shaft. The coupling may be by any means that ensures torque transfer and also relative movement between the coupled parts, e.g. a linear bearing, ball bearings, splines, key features, a D-shaft or the like.

Operation of the clutch is therefore caused by the spring radial expansion and the solenoid only needs to be strong enough to counteract the spring stiffness. The force of the clutch is therefore not directly related to the force applied, as it is in conventional assemblies in which the solenoid has to provide the force directly to compress the clutch plates.

Position sensors (not shown) may be provided in the assembly to indicate the position (and therefore state of engagement) of the clutch assembly. Various known types of sensor e.g. Hall sensors, mechanical switches etc. may be used.

Similarly, position sensors (not shown) may be provided in the assembly to indicate the position (and therefore state of energisation) of the solenoid. Various known types of sensor e.g. Hall sensors, mechanical switches etc. may be used.

The example here shows the clutch/brake assembly located between the reducer and the output, but the concept is also applicable to the assembly located in other regions of the EMA.

Using the logarithmic spring as the clutch, rather than the linear arrangement of plates compressed by a solenoid, the force required by the solenoid is substantially (around 5 times) less than for a conventional assembly. This results in a smaller, lighter assembly and reduced need for current absorption and heat dissipation.

## Claims

1. A clutch/brake assembly comprising:
an input shaft (42) arranged to be rotated, in use, by a motor;
an output shaft (44) configured to be rotated by the input shaft when brought into engagement therewith;
rotating clutch plate elements (47) configured to transmit torque from the input shaft to the output shaft when engaged;
a spring (45) mounted around the input shaft;
a translating shaft (46) around the spring;
an output sleeve (48) between the output shaft and the clutch plate elements; and
a solenoid (50) connected to the translating shaft; whereby
the solenoid, in a first state of energization, causes movement of the translating shaft to compress the spring in a first direction to bring the clutch plate elements and the input shaft and the output sleeve into engagement such that torque is transmitted from the input shaft to the output shaft via the spring, the clutch plate elements and the output sleeve, or, in a second state of energization, to compress the spring in a second direction such that the clutch plate elements are disengaged from the output sleeve such that torque is not transmitted between the clutch plate elements and the output shaft; and **characterised in that** the spring (45) is a logarithmic spring, and wherein the spring (45) has a first spring tooth (43a) arranged to transfer torque from the stiffness of the spring (45) to the rotating clutch elements (47) when the solenoid is in the second state of energisation, and/or wherein the spring (45) has a second spring tooth (43b) arranged to transfer torque from the input shaft (42) to the spring (45) and to the output sleeve (48) when the solenoid is in the first state of energisation.

2. The assembly of claim 1, wherein the solenoid is a normally disengaged solenoid, and wherein the first state of energisation is energised and the second state of energisation is de-energised.

3. The assembly of claim 1, wherein the solenoid is a normally engaged solenoid, and wherein the first state of energisation is de-energised and the second state of energisation is energised.

4. The assembly of any preceding claim, wherein the rotating clutch plate elements (47) are coupled to rotate with the input shaft (42) and are also arranged to translate linearly with respect to the input shaft.

5. The assembly of claim 4, wherein the rotating clutch plate elements (47) are coupled to the input shaft by means of: a linear bearing, a ball bearing and groove assembly, splines, key features, or a D-shaft.

6. An electromechanical actuator, EMS, comprising:
a motor (10);
an output (20) driven by the motor; and
a clutch/brake assembly as claimed in any preceding claim between the motor and the output.

7. The EMA of claim 6, further comprising a gear reducer (30) located between the motor and the output.

8. The EMA of claim 7, wherein the clutch/brake assembly is positioned between the gear reducer and the output.

9. The EMA of any of claims 6 to 8, further comprising position sensing means to detect a status of engagement or disengagement of the clutch/brake assembly.

10. The EMA of any of claims 6 to 9, further comprising position sensing means to detect a status of the solenoid.

## Patentansprüche

1. Kupplungs-/Bremsanordnung, umfassend:
eine Eingangswelle (42), die so angeordnet ist, dass sie im Gebrauch durch einen Motor gedreht wird;
eine Ausgangswelle (44), die konfiguriert ist, um durch die Eingangswelle gedreht zu werden, wenn sie mit dieser in Eingriff gebracht wird;
rotierende Kupplungsscheibenelemente (47), die konfiguriert sind, um Drehmoment von der Eingangswelle auf die Ausgangswelle zu übertragen, wenn sie in Eingriff stehen;
eine Feder (45), die um die Eingangswelle herum montiert ist;
eine Schiebewelle (46) um die Feder herum;
eine Ausgangshülse (48) zwischen der Ausgangswelle und den Kupplungsscheibenelementen; und
einen Solenoid (50), der mit der Schiebewelle verbunden ist;
wodurch
der Solenoid in einem ersten Erregungszustand eine Bewegung der Schiebewelle bewirkt, um die Feder in einer ersten Richtung zu komprimieren, um die Kupplungsscheibenelemente und die Eingangswelle und die Ausgangshülse in Eingriff zu bringen, sodass Drehmoment von der Eingangswelle auf die Ausgangswelle über die Feder, die Kupplungsscheibenelemente und die Ausgangshülse übertragen wird, oder in einem zweiten Erregungszustand die Feder in einer zweiten Richtung zu komprimieren, sodass die Kupplungsscheibenelemente von der Ausgangshülse gelöst werden, sodass kein Drehmoment zwischen den Kupplungsscheibenelementen und der Ausgangswelle übertragen wird; und **gekennzeichnet dadurch, dass** die Feder (45) eine logarithmische Feder ist, und wobei die Feder (45) einen ersten Federzahn (43a) aufweist, der angeordnet ist, um Drehmoment aus der Steifigkeit der Feder (45) auf die rotierenden Kupplungselemente (47) zu übertragen, wenn sich der Solenoid im zweiten Erregungszustand befindet, und/oder wobei die Feder (45) einen zweiten Federzahn (43b) aufweist, der angeordnet ist, um Drehmoment von der Eingangswelle (42) auf die Feder (45) und auf die Ausgangshülse (48) zu übertragen, wenn sich der Solenoid im ersten Erregungszustand befindet.

2. Anordnung nach Anspruch 1, wobei der Solenoid ein normalerweise gelöster Solenoid ist, und wobei der erste Erregungszustand erregt und der zweite Erregungszustand entregt ist.

3. Anordnung nach Anspruch 1, wobei der Solenoid ein normalerweise in Eingriff stehender Solenoid ist, und wobei der erste Erregungszustand entregt und der zweite Erregungszustand erregt ist.

4. Anordnung nach einem der vorhergehenden Ansprüche, wobei die rotierenden Kupplungsscheibenelemente (47) so gekoppelt sind, dass sie mit der Eingangswelle (42) rotieren, und außerdem so angeordnet sind, dass sie sich linear in Bezug auf die Eingangswelle verschieben.

5. Anordnung nach Anspruch 4, wobei die rotierenden Kupplungsscheibenelemente (47) mit der Eingangswelle gekoppelt sind mittels: eines Linearlagers, einer Kugellager- und Nutanordnung, Keilverzahnungen, Keilmerkmalen oder einer D-Welle.

6. Elektromechanischer Aktuator, EMS, umfassend:
einen Motor (10);
einen Ausgang (20), der durch den Motor angetrieben wird; und
eine Kupplungs-/Bremsanordnung nach einem der vorhergehenden Ansprüche zwischen dem Motor und dem Ausgang.

7. EMS nach Anspruch 6, ferner umfassend ein Untersetzungsgetriebe (30), das sich zwischen dem Motor und dem Ausgang befindet.

8. EMS nach Anspruch 7, wobei die Kupplungs-/Bremsanordnung zwischen dem Untersetzungsgetriebe und dem Ausgang positioniert ist.

9. EMS nach einem der Ansprüche 6 bis 8, ferner umfassend Positionserfassungsmittel zum Erfassen eines Zustands des Eingriffs oder des Gelöstseins der Kupplungs-/Bremsanordnung.

10. EMS nach einem der Ansprüche 6 bis 9, ferner umfassend Positionserfassungsmittel zum Erfassen eines Zustands des Solenoids.

## Revendications

1. Ensemble embrayage/frein comprenant :
un arbre d'entrée (42) agencé pour être entraîné en rotation, pendant son utilisation, par un moteur ;
un arbre de sortie (44) configuré pour être entraîné en rotation par l'arbre d'entrée lorsqu'il est mis en prise avec celui-ci ;
des éléments de disque d'embrayage rotatifs (47) configurés pour transmettre le couple de l'arbre d'entrée à l'arbre de sortie lorsqu'ils sont mis en prise ;
un ressort (45) monté autour de l'arbre d'entrée ;
un arbre de translation (46) autour du ressort ;
un manchon de sortie (48) entre l'arbre de sortie et les éléments de disque d'embrayage ; et
un solénoïde (50) relié à l'arbre de translation ; moyennant quoi
le solénoïde, dans un premier état d'excitation, provoque le mouvement de l'arbre de translation pour comprimer le ressort dans une première direction afin de mettre en prise les éléments de disque d'embrayage et l'arbre d'entrée et le manchon de sortie, de sorte que le couple est transmis de l'arbre d'entrée à l'arbre de sortie par l'intermédiaire du ressort, des éléments de disque d'embrayage et du manchon de sortie, ou, dans un second état d'excitation, pour comprimer le ressort dans une seconde direction de sorte que les éléments de disque d'embrayage soient désolidarisés du manchon de sortie, de sorte que le couple ne soit pas transmis entre les éléments de disque d'embrayage et l'arbre de sortie ; et **caractérisé en ce que** le ressort (45) est un ressort logarithmique, et dans lequel le ressort (45) a une première dent souple (43a) agencée pour transférer le couple de raideur du ressort (45) aux éléments d'embrayage rotatifs (47) lorsque le solénoïde se trouve dans le second état d'excitation, et/ou dans lequel le ressort (45) a une seconde dent souple (43b) agencée pour transférer le couple de l'arbre d'entrée (42) au ressort (45) et au manchon de sortie (48) lorsque le solénoïde se trouve dans le premier état d'excitation.

2. Ensemble selon la revendication 1, dans lequel le solénoïde est un solénoïde normalement désolidarisé, et dans lequel le premier état d'excitation est excité et le second état d'excitation est désexcité.

3. Ensemble selon la revendication 1, dans lequel le solénoïde est un solénoïde normalement mis en prise, et dans lequel le premier état d'excitation est désexcité et le second état d'excitation est excité.

4. Ensemble selon une quelconque revendication précédente, dans lequel les éléments de disque d'embrayage rotatifs (47) sont accouplés pour tourner avec l'arbre d'entrée (42) et sont également agencés pour se déplacer linéairement en translation par rapport à l'arbre d'entrée.

5. Ensemble selon la revendication 4, dans lequel les éléments de disque d'embrayage rotatifs (47) sont accouplés à l'arbre d'entrée au moyen de : un roulement linéaire, un ensemble roulement à billes et rainure, des cannelures, des éléments clés ou un arbre en D.

6. Actionneur électromécanique (EMS) comprenant :
un moteur (10) ;
une sortie (20) entraînée par le moteur ; et
un ensemble embrayage/frein selon une quelconque revendication précédente entre le moteur et la sortie.

7. EMA selon la revendication 6, comprenant en outre un réducteur à engrenages (30) situé entre le moteur et la sortie.

8. EMA selon la revendication 7, dans lequel l'ensemble embrayage/frein est positionné entre le réducteur à engrenages et la sortie.

9. EMA selon l'une quelconque des revendications 6 à 8, comprenant en outre des moyens de détection de position pour détecter un état de mise en prise ou de désolidarisation de l'ensemble embrayage/frein.

10. EMA selon l'une quelconque des revendications 6 à 9, comprenant en outre des moyens de détection de position pour détecter un état du solénoïde.
